# EUROPEAN PATENT APPLICATION

(11) **EP 1 229 700 A2**
(43) Date of publication of application: **07.08.2002**
(21) Application number: 02250509.3
(22) Date of filing: 25.01.2002
(51) Int. Cl.: H04L 29/06

(54) **An internet appliance remote operator**

(30) Priority: 26.01.2001 US 770556
(71) Applicant: Hewlett-Packard Company, Palo Alto, CA 94304 (US)
(72) Inventor: Krishnan, Venkatesh, Sunnyvale, CA 94087 (US); Morgan, Jeffrey A., Cupertino, CA 95014 (US); Tourrihes, Jean, No. 3 Mountain View, CA 94060 (US)
(74) Representative: Tollett, Ian

(57) **Abstract**

An Internet appliance remote operator (10) is described. The operator (10) includes a sender (52) that electronically sends a web address to an external Internet appliance (20) via a communication channel. The operator (10) also includes a receiver (53) that electronically receives a web address from an external web address transmitter (15). A storage (43) is provided to store web addresses. A user interface (41) is provided to receive a user control command as to send or receive a web address, and to display the web address sent or received. A processor (42) is coupled to the sender (52), the receiver (53), the storage (43), and the user interface (41) to cause the sender (52) (or the receiver (53)) to send (or receive) a web address in response to the control command received from the user interface (41). The Internet appliance remote operator (10) is a key chain tag-sized device with all modules reside inside an enclosure that is the size of a key-chain tag.

## Description

The present invention relates to an Internet appliance remote operator. More particularly, this invention relates to a key-chain tag-sized remote operator for an Internet appliance such that the Internet appliance can be remotely operated.

With the rapid growth of the Internet and widespread use of World Wide Web (WWW), a wide variety of new Internet-based media delivery platforms have been developed. Internet radio is just one example of such platforms. Under this platform, the broadcaster only needs to employ a special audio web server as the radio station to broadcast audio signals over the Internet. The special audio web server is typically referred to as Internet radio station. The broadcast from the Internet radio station can be picked by any computer system equipped with web browsing and audio processing and playing capabilities and is connected to the Internet (i.e., on-line).

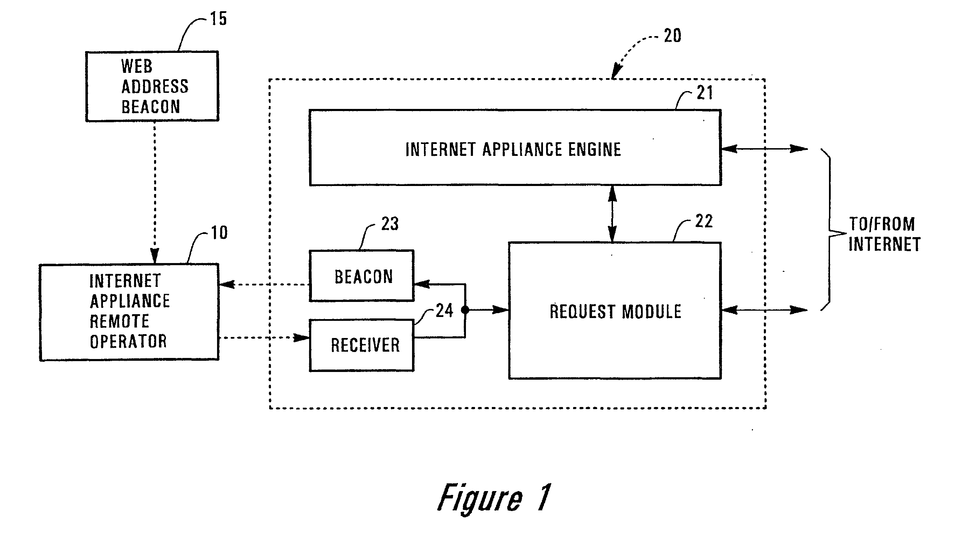

To further facilitate accesses to the Internet radio broadcasting, Internet radio appliances have been developed. An Internet radio appliance is basically a radio receiver with Internet access and browsing capability. Typically, the Internet radio receiver system includes a request module that is used to *"tune"* the Internet radio receiver system to a particular Internet radio station (not shown in Figure 1). The *"tuning"* is done by having the request module send a HTTP request to the desired Internet radio station via the Internet. Once the request module causes the Internet radio receiver system to be *"tuned"* to the desired Internet radio station, an audio streaming module in the Internet radio receiver system receives the audio broadcast content from the desired Internet radio station via the Internet. The audio broadcast content is typically encoded in a known audio format (e.g., MP3). The audio streaming module streams the audio broadcast content. The streamed audio signal is then sent to the audio signal processing module for audio signal processing before the audio signal is played by the speaker of the Internet radio receiver system. The audio signal processing is basically conventional audio signal processing (e.g., amplification, frequency equalization, and surround sound processing). A user interface is also employed in the Internet radio receiver system to allow listener of the system to input web addresses of desired Internet radio stations into the request module.

One advantage of the Internet radio platform is that it typically lowers the barrier for audio broadcasting. This is due to the fact that in order for the broadcasting to happen, the broadcaster only needs to have the special audio web server connected to the Internet. There is no need for the broadcaster to spend huge capital on equipments that send audio signals into air.

In addition, the Internet radio platform allows listeners at any geographical locations to be able to listen to any radio broadcast (as long as they are connected to the Internet), thus breaking down geographical boundaries. The third advantage of the Internet radio platform is that there is no limit as to the number of radio stations allowed in one area. As we know, each conventional air-wave radio station must be assigned a frequency by a regulatory government agency (i.e., FCC). For Internet broadcasting, there is no frequency allocation for each Internet radio station. Each station only needs to have a web address.

Moreover, the advance in the Internet technology also allows other types of Internet appliances to be developed and made available. For example, an Internet video appliance can receive and display video content received from Internet TV stations via the Internet. As a further example, the Internet video appliance may also be allowed to access a movie warehouse web site to order movies via the Internet.

However, disadvantages are still associated with the prior Internet appliance like the prior Internet radio appliance. One disadvantage is that the prior Internet appliance does not provide an easy and convenient way for its user to operate the corresponding Internet appliance. For example, if a listener of an Internet radio appliance wants to *"tune"* the Internet radio appliance to a desired Internet radio station, the listener must manually input the web address of the desired Internet radio station into the Internet radio appliance, or access the appliance from a personal computer through a user interface. As is known, the web address is not easy to remember and can be long (especially if the web address points to a specific web page (or radio program, movie, video broadcast program within the Internet radio station). One reason for the long and confusing web addresses is that their corresponding web pages are typically transient and need to be changed on a regular basis as time advances. Mistakes typically occur when the listener manually inputs the long web addresses.

One feature of the present invention is to allow easy, convenient, and remote operation of an Internet appliance.

Another feature of the present invention is to allow the user of an Internet appliance to electronically input web addresses to the Internet appliance remotely and conveniently.

A further feature of the present invention is to provide a remote operator for an Internet appliance that is very small in size.

Below described is an Internet appliance remote operator. The remote operator includes a communication module that (1) sends a web address to the external Internet appliance, and (2) receives a web address from an external web address transmitter. The remote operator also includes a storage that stores web addresses. A user interface is also provided to receive a user control command as to send or receive a web address, and to display the web address sent or received. A processor is coupled to the communication module, the storage, and the user interface to cause the communication module to send or receive a web address in response to the control command received from the user interface. All modules of the remote operator reside in an enclosure that is approximately the size of a key-chain tag.

A web address sender and receiver apparatus is also described. The apparatus includes a sender that electronically sends a web address to an external Internet appliance via a communication channel. The apparatus also includes a receiver that electronically receives a web address from an external web address transmitter. A storage is provided to store web addresses. A user interface is provided to receive a user control commend as to send or receive a web address, and to display the web address sent or received. A processor is coupled to the sender, the receiver, the storage, and the user interface to cause the sender (or the receiver) to send (or receive) a web address in response to the control command received from the user interface. The web address sender and receiver apparatus is a key chain tag-sized device.

Other features and advantages of the invention will become apparent from the following detailed description, taken in conjunction with the accompanying drawings, illustrating by way of example the principles of the invention.

A number of preferred embodiments of the invention will now be described, with reference to the drawings, in which:-
Figure 1 schematically shows an Internet appliance remote operator in accordance with one embodiment of the present invention. Figure 1 also shows how the Internet remote operator is being used to receive, electronically, web addresses from an external web address beacon or transmitter, and to send, electronically, web addresses to an external Internet appliance.
Figure 2 shows the exterior structure of the remote operator of Figure 1, illustrating various control buttons.
Figure 3 shows in block diagram form the internal circuitry of the Internet appliance remote operator of Figure 1, wherein the operator includes a communication module, a processor, a storage, and a user interface.
Figure 4 shows the structure of the communication module of Figure 3.
Figure 5 illustrates the operational relationship between the control buttons of the user interface of Figure 3 and the storage of Figure 3.

Figure 1 shows an Internet appliance remote operator 10. In accordance with one embodiment of the present invention, the Internet appliance remote operator 10 is used to electronically transmit web addresses to Internet appliances (e.g., Internet appliance 20) external to the remote operator 10. This allows user of an Internet appliance to electronically input web addresses to the corresponding Internet appliance remotely and conveniently through the remote operator 10. The remote operator 10 can also receive electronic transmission of web addresses from web address beacons (e.g., web address beacon 15). This allows the Internet appliance remote operator 10 to electronically receive web addresses. Here, the term "web address" is not limited to the URL address for the World Wide Web. Instead, the term "web address" refers to any Internet address under any open standard communication protocol that indicates a web site or Internet site.

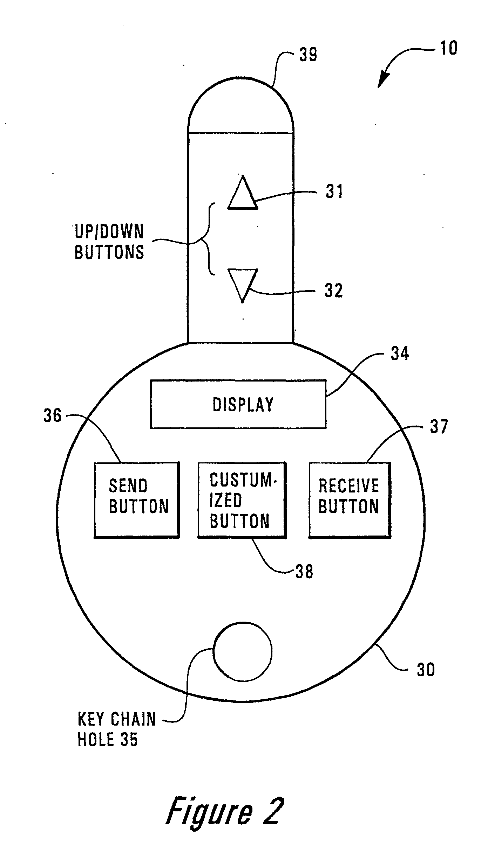

Moreover, the remote operator 10 is very small in size. In one embodiment, the Internet appliance remote operator 10 is a key-chain tag-sized device. This means that all functional modules of the operator 10 reside in an enclosure that is approximately of the size and shape of a key chain tag. Alternatively, the size of the Internet appliance remote operator 10 can be bigger or smaller than a key chain tag. Figures 2-5 show in more detail the circuitry and exterior shape and features of the Internet appliance remote operator 10, which will be described in more detail below.

Referring now to Figure 1, the environment in which the Internet appliance remote operator 10 operates includes the Internet appliance 20 and the web address beacon 15. The Internet appliance 20 is used to receive web addresses transmitted electronically from the remote Internet appliance remote operator 10. The web address beacon 15 is physically separate from the Internet appliance 20 and is used to transmit electronic signals containing a web address or web addresses to the Internet appliance remote operator 10. This means that the Internet appliance remote operator 10 is used to electronically send web addresses to remote Internet appliances, and to electronically receive web addresses from remote web address beacons. This will be described in more detail below.

The Internet appliance 20 can be any kind of Internet appliance. For example, the Internet appliance 20 can be an Internet radio appliance or an Internet video appliance (e.g., Internet TV, Internet VCR, Internet DVD). As a further example, the Internet appliance 20 can be an Internet-enabled cellular phone, an Internet gateway system, or an Internet-enabled office equipment (e.g., printer, copier, or fax machine, projector). In one word, the Internet appliance 20 can be any kind of device that contains a web browser (or web client) software and is capable of being connected to the Internet.

When the Internet appliance 20 is an Internet radio appliance or Internet video appliance (i.e., Internet TV), the following description shows how the Internet appliance 20 operates.

First, an Internet radio station "broadcasts" audio broadcast via the Internet. An Internet radio station is basically a web server connected to the Internet. The web server contains audio processing capability that allows the web server to send audio broadcast to a requesting Internet radio appliance via the Internet. Here, the term audio broadcast refers to the use of transport protocols such as HTTP and Multi-cast to transfer audio streams via Internet. When accessed by an Internet radio appliance, the Internet radio station encodes its audio broadcast content in a known format (e.g., MP3) and then sends the encoded content over onto the Internet to be received by the requesting system or appliance.

The Internet radio appliance, when connected to the Internet (i.e., on-line) and accessing a desired Internet radio station, receives the audio broadcast from that Internet radio station. When the listener of the Internet radio appliance wants to listen to the broadcast of another Internet radio station, the Internet radio appliance sends a request with the web address of that other Internet radio station over the Internet. This allows the Internet radio appliance to be "connected" to the other Internet radio station and thus to receive the audio broadcast of the other Internet radio station.

If the Internet appliance 20 is an Internet video receiver system, the Internet video receiver system is used as an Internet video receiver system (or Internet TV) to receive video broadcast from any external Internet video or TV station via the Internet. An Internet video or TV station is basically a web server connected to the Internet. The web server can send video broadcast to a requesting Internet video receiver system via the Internet. Here, the term video broadcast refers to the use of transport protocol such as HTTP and Multi-cast to transfer video streams over Internet. When accessed by a client system or an Internet video receiver system, the Internet video station encodes its video broadcast content in a known format and then sends the encoded content over onto the Internet to be received by the requesting system or appliance.

Figure 1 also shows the structure of the Internet appliance 20, which includes an Internet appliance engine 21, a request module 22, a URL (Universal Resource Locator) beacon 23, and a URL receiver 24. The engine 21 is a device-specific engine. This means that the structure of the engine 21 depends on what type of device the Internet appliance 20 is. For example, if the Internet appliance 20 is an Internet radio appliance, then the Internet appliance engine 21 contains an audio streaming module, an audio signal processing module, and a speaker (all are not shown). The structure of each of these modules is known and will not be described in more detail below. If the Internet appliance 20 is an Internet video appliance, then the Internet appliance engine 21 may contain video and audio processing, streaming modules, and display that are also known.

The request module 22 is also connected to the Internet appliance engine 21. The URL beacon 23 is connected to the request module 22, and the URL receiver 24 is also connected to the request module 22. In one embodiment, the URL beacon 23 and the URL receiver 24 are two physically separate modules. In another embodiment, the URL beacon 24 and the receiver 24 are integrated into a single physical module that can be implemented by the combination of hardware and software.

The request module 22 is used to cause the Internet appliance 20 to access a desired Internet site. This means that the request module 22 is used to request a connection with the desired Internet site via the Internet. Once connection is established between the Internet appliance 20 and the desired Internet site, the desired Internet site sends the requested content or program to the Internet appliance 20 via the Internet. To establish connection with the desired Internet site, the request module 22 generates and sends a request with the web address of the Internet site (e.g., Universal Resource Locator) to the external Internet site via the Internet. The request module 22 generates and sends the request using an open standard communication protocol (i.e., Hyper Text Transport Protocol). Thus, the request module 22 can also be referred to as the HTTP module. The request module 22 is like a web browser that does not have the image rendering function. The request typically contains the web address of the desired Internet site.

The request module 22 receives the web address of the desired Internet site through the URL receiver 24. In accordance with one embodiment of the present invention, the URL receiver 24 is employed to electronically receive web addresses of Internet sites desired by the user of the Internet appliance 20 from the Internet appliance remote operator 10. As described above, the Internet appliance remote operator 10 is used to remotely transmit web addresses to the Internet appliance 20 in electronic format such that the user of the Internet appliance 20 does not have to manually input the web address of the desired Internet site to be accessed by the Internet appliance 20. This means that the main function of the receiver 24 is to receive or capture the electronic signal that contains the web address. The receiver 24 then parses the web address and sends it to the request module 22 of the Internet appliance 20.

The receiver 24 includes a receiver circuit and a parser (both are not shown in Figure 1). The receiver circuit can be implemented using any known local communication technology. For example, if radio communication is employed between the Internet appliance 20 and the remote operator 10, the receiver circuit of the receiver 24 is a radio receiver circuit. If infrared communication is employed, then the receiver circuit of the receiver 24 is an infrared receiver circuit.

The parser of the receiver 24 is used to capture web addresses from the received electronic transmission. In addition, the transmission may include more than just the web address information. It may include information regarding whether the web address is presented in the hypertext form, and if so, the user name of the hypertext. In this case, the parser of the receiver 24 is used to separate the information into different data fields. The remote operator 10 can also be equipped to control other operations of the Internet appliance 20 (like a remote control for a TV or VCR). These other control functions are in addition to the electronic web address input function of the remote operator 10. Alternatively, the receiver 24 does not include the parser.

Referring again to Figure 1, the URL beacon 23 of the Internet appliance 20 is used to transmit electronically or "broadcast" to any external receiving device the web address of the web site (or Internet site) which is currently accessed by the Internet appliance 20. The external receiving device can be, for example, the remote operator 10. Other receiving devices may also receive the web address transmission from the URL beacon 23. These other receiving devices may be a PDA (personal digital assistant), a pager, a watch, a cellular phone, or any other kind of information appliance. In alternative embodiments, the Internet appliance 20 does not contain the URL beacon 23.

As described above, the remote operator 10 can also receive web addresses from the web address beacon 15. The function of the web address beacon 15 is substantially same as that of the URL beacon 23. The web address beacon 15 is typically associated with a web site or Internet site and transmits the web address of that web site. Once the remote operator 10 is within the transmission range of the web address beacon 15, the remote operator 10 can receive or capture the transmission from the web address beacon 15. The remote operator 10 can either store the web addresses captured or send them to the Internet appliance 20 or other devices.

The structure of the web address beacon 15 is similar to that of the URL beacon 23. Here, the term *"beacon"* (or URL beacon) is defined as a module or device that broadcasts or transmits the web address in accordance with a predetermined open standard communication protocol. The beacons 15 and 23 can be implemented by any known beacon that broadcasts or transmits signals (referred to as beacon signal).

In one embodiment, each of the beacons 15 and 23 constantly transmits the beacon signal. In another embodiment, the beacons 15 and 23 can be constructed to periodically transmit beacon signals. Alternatively, the beacons 15 and 23 can be constructed to transmit the beacon signal whenever activated by external stimulus.

The transmission range of each of the beacons 15 and 23 is determined by the physical communication technology adopted by the respective beacon. In one embodiment, the communication technology employed by the beacon can be a short range wireless technology such as infrared (e.g., the IrDA technology developed by several companies including Hewlett-Packard Company of Palo Alto, California), ultra-sound, or the low power, high frequency, short-range radio (2.4 - 5 Ghz) transmission (e.g., the Bluetooth technology developed by several telecommunications and electronics companies).

If the beacon (i.e., either the beacon 15 or 23) has a wireless transmission capability, the beacon can have a short or long transmission range. In one embodiment, the beacon is a short range beacon. In this case, the transmission range of the beacon can be approximately three to six feet. In another embodiment, the beacon is a long range beacon.

As described above, the Internet appliance remote operator 10 is used to remotely input web addresses to the Internet appliance 20 in accordance with one embodiment of the present invention. In addition, the Internet appliance remote operator 10 can also remotely receive beacon signals containing web addresses from web address beacons (e.g., beacon 15) that are associated with web sites or from URL beacons (e.g., URL beacon 23) that are embedded in Internet appliances (e.g., the Internet appliance 20). This is also in accordance with one embodiment of the present invention. With the remote operator 10, web addresses can be easily transferred, in an error-free manner, from one device to another, or from one place to another.

Figure 2 shows the Internet appliance remote operator 10 in more detail. As can be seen from Figure 2, the remote operator 10 is a portable handheld electronic communication device that is relatively very easy to carry and very small in size. Figure 2 shows one embodiment of the remote operator 10. In this embodiment, the remote operator 10 is in the shape and of the size of a regular key-chain tag. This means that the enclosure 30 of the remote operator 10 is in that shape and size. As can be seen from Figure 2, the enclosure 30 has a base in the shape of a vertically sliced apple. This thickness of that sliced-apple base can be from 1/4 inch to one inch, for example. The upper part of the enclosure is a cylinder. Alternatively, the remote operator 10 can be in other shapes and/or size. For example, the base can be in a rectangular shape. All functional modules of the remote operator 10 reside inside the enclosure 30.

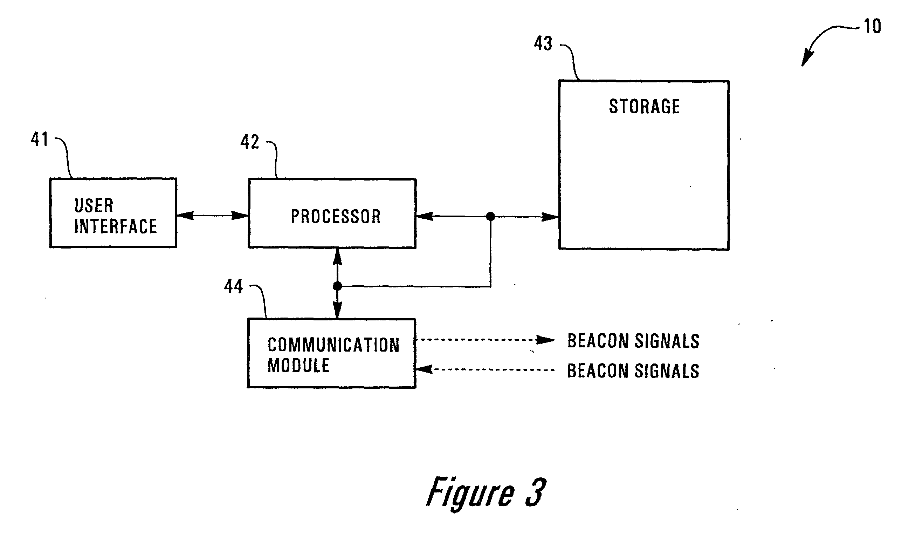

The enclosure 30 includes a protruding top 39 that houses the communication module of the remote operator 10 (i.e., the communication module 44 in Figure 3). In addition, there are a number of control buttons (i.e., the control buttons 31-32 and 36-38) and a display 34 on the surface of the enclosure 30. In one embodiment, the control buttons include an UP button 31, a DOWN button 32, a SEND button 36, a CUSTOMIZED button 37, a RECEIVER button 38. Alternatively, more or fewer control buttons may be included. The control buttons and display are part of a user interface 41 (i.e., the user interface 41 of Figure 3) of the remote operator 10. A key-chain hole 35 is also provided such that the remote operator 10 can be attached to a key chain. These control buttons and display will be described in more detail below, also in conjunction with Figures 3-5.

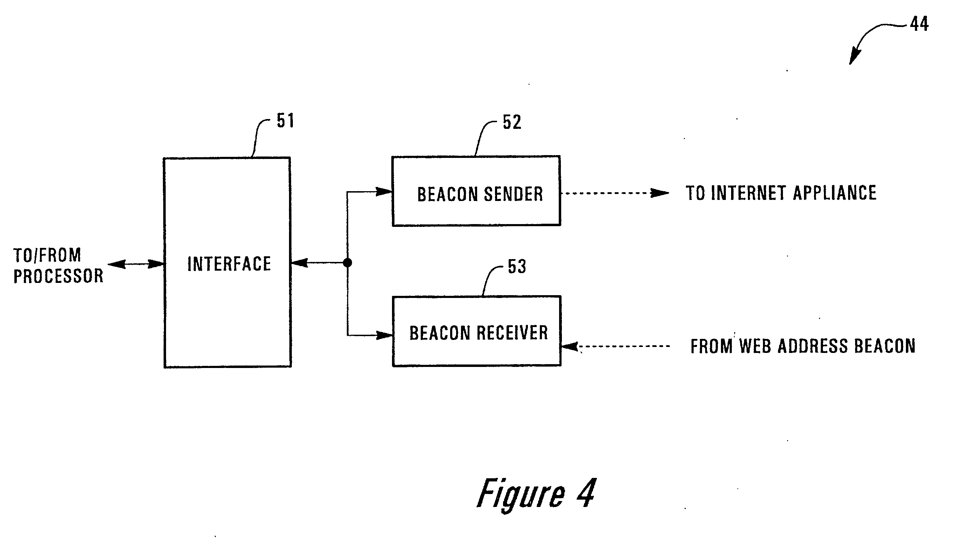

Figure 3 shows the functional structure of the remote operator 10. As can be seen from Figure 3 and in addition to the communication module 44 and the user interface 41, the remote operator 10 includes a processor 42 coupled to the user interface 41 and the communication module 44, and a storage coupled to the processor 42. The communication module 44 is used to communicate with the Internet appliance 20 and the web address beacon 15. The communication module 44 transmits web addresses to remote Internet appliance (e.g., the Internet appliance 20 of Figure 1) and receives web addresses from remote web address beacons (e.g., the web address beacon 15 of Figure 1). Figure 4 shows the structure of the communication module 44, which will be described in more detail below.

As can be seen from Figure 4, the communication module 44 includes an interface 51, a beacon sender 52, and a beacon receiver 53. The interface 51 is controlled by other modules of the remote operator 10 to either activate the beacon sender 52 or the beacon receiver 53. The interface 51 also receives from the beacon receiver 53, or sends web addresses to the beacon sender 52.

The beacon sender 52 is used to electronically transmit web addresses, one address at a time, to external Internet appliances (e.g., the Internet appliance 20 of Figure 1). The structure of the beacon sender 52 depends on the communication technology used, and is similar to that of the URL beacon 23 or the web address beacon 15 (both in Figure 1). The beacon sender 52 can be implemented by any known beacon that broadcasts or transmits signals.

The transmission range of the beacon sender 52 is determined by the physical communication technology adopted. In one embodiment, the communication technology employed by the beacon can be a short range wireless technology such as infrared (e.g., the IrDA technology developed by several companies including Hewlett-Packard Company of Palo Alto, California), ultra-sound, or the low power, high frequency, short-range radio (2.4 - 5 Ghz) transmission (e.g., the Bluetooth technology developed by several telecommunications and electronics companies).

The beacon receiver 53 is used to electronically receive or capture web addresses transmitted from external and remote web address beacons (e.g., the web address beacon 15 or URL beacon 23 of Figure 1), one address at a time. The structure of the beacon receiver 53 depends on the communication technology used, and is similar to that of the URL receiver 24 of Figure 1. This means that the receiver 53 can be implemented using any known local communication technology. For example, if radio communication is employed, the receiver beacon 53 is a radio receiver circuit. If infrared communication is employed, then the receiver beacon 53 is an infrared receiver circuit.

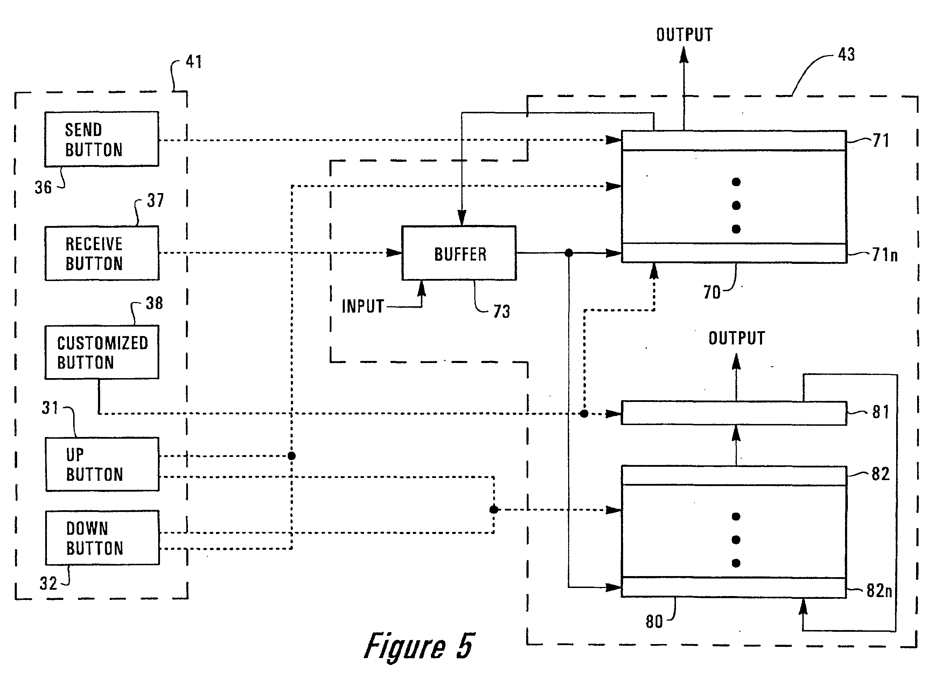

Referring to Figure 3, the processor 42 is the central controlling unit of the operator 10 that receives all control inputs and web addresses and generates all necessary control signals to control the operation of each of the modules 41 and 43-44. The processor 42 can be implemented using any known technology. Therefore, the structure of the processor 42 will not be described in more detail below. The functional control of the processor 42 will be described in more detail, also in conjunction of Figure 5.

Referring again to Figure 3, the storage 43 is implemented by any known memory or storage circuitry. For example, the storage 43 can be implemented by volatile or nonvolatile memory. The storage 43 is used to store web addresses received and/or to be sent by the communication module 44. The storage 43 is organized like a FIFO (First In First Out) buffer that includes a number of entries, each for storing a web address. In one embodiment, the top entry of the storage 43 stores the web address to be sent and the bottom entry of the storage 43 stores the web address received most recently. In addition, a separate storage area having a number of entries is reserved to bookmark web addresses and to store the book-marked web addresses. Figure 5 shows the functional organization of the storage 43, which will be described in more detail below.

Referring back to Figures 2-3, the user interface 41 includes the control buttons 31-32 and 36-38 and the display 34. The user interface 41 also includes circuitry (not shown) that are associated with the control buttons 31-32 and 36-38 and the display 34. The function of the associated circuitry is to convert user action on the control buttons into control signals, and to render the web address data onto the display 34. The circuitry is known in the art and will not be described in more detail below.

The SEND button 36 controls the remote operator 10 to send the web address stored in the top entry of the storage 43. The RECEIVE button is used to cause the remote operator 10 to receive or capture a web address transmitted from an external web address beacon (e.g., the beacon 15 or 23) and to store the captured web address in a temporary buffer (not shown in Figure 3) of the storage 43.

The SEND button 36 may also control the mode of the remote operator 10 in which the web address is sent. This means that the remote operator 10 may have different mode of transmission. For example, remote operator 10 can be a default mode and a beacon sending mode. The remote operator 10 is in the default mode when powered on. When the SEND button 36 is pressed down for longer than a predetermined time period (e.g., five seconds), the remote operator 10 goes into the beacon sending mode. When the operator 10 is in the default mode, the web address selected to be sent is transmitted once by the communication module 44 of the remote operator 10 when the SEND button 36 is pressed. When the remote operator 10 is in the beacon sending mode, then the web address selected to be sent is transmitted by the communication module 44 periodically until the SEND button 36 is pressed again to stop the transmission.

The CUSTOMIZED button 38 has two functions. One function is to cause the received web address stored in the temporary buffer to be stored in either the bottom entry of the general storage area of the storage 43, or the bottom entry of the customized storage area of the storage 43. The distinction can be made by, for example, the number of times the CUSTOMIZED button 38 is pressed. If the CUSTOMIZED button 38 is pressed once, then the processor 42 of the remote operator 10 causes that the web address stored in the buffer 73 to be stored in the general storage area of the storage 43. If the CUSTOMIZED button 38 is pressed twice, then the processor 42 of the remote operator 10 causes the web address stored in the buffer 73 to be stored in the customized storage area of the storage 43.

The other function of the control button 38 is referred to as "tag me" function which is basically a bookmark function. This function allows the remote operator 10 to tag a web address and to send the tagged web address when needed. This button allows the user of the remote operator 10 to select personalized web addresses and store them separately in the customized storage area of the storage 43. The CUSTOMIZED button 38, when pressed, normally causes the first function to be performed. When the user of the remote operator 10 wants to use the button 38 for the second function, the user can press the button down for a predetermined period of time (e.g., five seconds). This will cause the button to be switched to the second functional mode.

The UP and DOWN control buttons 31-32 can have different uses or functions. In one embodiment, the UP and DOWN control buttons 31-32 can be programmed to send UP and DOWN commands to the remote Internet appliance 20. The functions of the UP and DOWN commands depend on the Internet appliance 20. For example, the UP command can be interpreted by the remote Internet appliance 20 to mean volume up while the DOWN command means volume down (if the Internet appliance 20 is an Internet radio or TV). If the Internet appliance 20 is a projector, the UP (or DOWN) command can mean page up (or down). The UP and DOWN buttons 31-32 are also programmable. As an example, one can program the UP button's URL by pressing the UP button 31 and RECEIVER button 38 simultaneously and receive and read in the new web address from an external beacon (e.g., the beacon 15) to program the UP button to send the new web address.

In another embodiment, the UP and DOWN control buttons 31-32 can be programmed to move the web addresses stored in the storage 43 to the top or bottom entry of the storage 43. In addition, the UP and DOWN buttons 31-32 can also be used to move the personalized or book-marked web addresses in and out of the special storage entry (i.e., the "ME" storage entry) in the customized storage area of the storage 43. That "ME" storage entry stores the personalized web address to be sent to external Internet appliance. This transmission is activated or triggered by the user pressing the CUSTOMIZED button 38.

Figure 5 illustrates the operational relationship between the control buttons 31-32 and 36-38 of Figure 2) and the storage 43 of Figure 3 in accordance with one embodiment. In this embodiment, the UP and DOWN buttons 31-32 are used to move the web addresses in the storage 43. In addition, Figure 5 shows the functional control of the processor 42 and the functional organization of the storage 43. As can be seen from Figure 5, the storage 43 includes a general storage area 70 which includes a top entry 71 and a bottom entry 71n. There are many entries between these two entries. In addition, a temporary buffer 73 is connected to the last entry of the general storage area 70. In one embodiment, when the web address in the top entry 71 is sent, the web address is moved to the buffer 73. This web address will reenter the general storage area 70 only if the CUSTOMIZED button 38 is pressed. The CUSTOMIZED button 38 may also send the web address in the buffer 73 to the bottom entry of the customized storage area 80 of the storage 43.

The SEND button 36 causes the web address stored in the top entry to be sent to external Internet appliances. This is shown in Figure 5 with a dotted line because the processor 42 of Figure 3 actually controls the operation in response to the control signal generated by the SEND button 36. Similarly, the RECEIVE button 37 causes the processor 42 of Figure 3 to control the communication module 44 to receive a web address into the buffer 73. The UP and DOWN buttons 31-32 are used to move web addresses stored in other entries of the general storage area 70 into either the top entry 71 or the bottom entry 71n.

The customized storage area 80 includes the "ME" storage entry 81 and a number of entries 82 through 82n. The "ME" storage entry 81 stores the personalized web address to be sent to external Internet appliances. This is done by pressing the CUSTOMIZED button 38 when that button is in the mode of performing this function. As described above, the other function of the button is to store the web address in the buffer 73 into the bottom entry of either the general storage area 70 or the customized area 80. The UP and DOWN buttons 31-32 may also be used to move web addresses stored in the customized storage area 80 into or out of the "ME" storage entry 81.

In the foregoing specification, the invention has been described with reference to specific embodiments thereof. It will, however, be evident to those skilled in the art that various modifications and changes may be made thereto without departing from the broader scope of the invention. The specification and drawings are, accordingly, to be regarded in an illustrative rather than a restrictive sense.

## Claims

1. An Internet appliance remote operator (10), comprising:
a sender (52) that electronically sends a web address to an external Internet appliance (20);
a receiver (53) that electronically receives a web address from an external Internet address transmitter (15);
a storage (43) that stores web addresses; and
a user interface (41) that receives a user control command to send or receive a web address, and displays the web address sent or received.

2. An Internet appliance remote operator (10) as claimed in claim 1, further comprising a processor (42) coupled to the sender (52), the receiver (53), the storage (43), and the user interface (41) to cause the sender or receiver to send or receive the web address in response to the user control command received from the user interface (41).

3. An Internet appliance remote operator (10) as claimed in claim 1 or 2, wherein the sender (52), the receiver (53), and the storage (43) all reside in an enclosure that is approximately of the size of a key chain tag.

4. An Internet appliance remote operator (10) as claimed in any preceding claim, wherein the sender (52) is a beacon sender that transmits wirelessly a beacon signal containing the web address, wherein the beacon sender has a predetermined transmission range.

5. An Internet appliance remote operator (10) as claimed in any preceding claim, wherein the receiver (53) is a beacon receiver that receives external electronic transmission containing a web address, and extracts the web address from the transmission.

6. An Internet appliance remote operator (10) as claimed in any preceding claim, wherein the storage (43) is partitioned into a general storage area and a customized storage area that stores user-specific web addresses.

7. An Internet appliance remote operator (10) as claimed in any preceding claim, wherein the user interface (41) allows the user to manually input a web address to the storage (43), wherein the user interface (41) also includes a customized control function that allows the operator to send a user-specified web address.

8. A method of inputting a web address to an Internet appliance (20), comprising the
(a) steps of providing an Internet remote operator;
(b) receiving with said operator a web address transmitted by an Internet address transmitter; and
(c) transmitting from said operator a net address to said Internet appliance.

9. A method as claimed in claim 8 comprising the additional step of storing a received web address in said operator.
